# EUROPEAN PATENT APPLICATION

(11) **EP 4 737 186 A1**
(43) Date of publication of application: **06.05.2026**
(21) Application number: 23944155.3
(22) Date of filing: 25.09.2023
(51) Int. Cl.: B60L 3/00

(54) **BATTERY BOX, BATTERY SYSTEM AND VEHICLE**

(30) Priority: 05.07.2023 CN 202321746961 U
(71) Applicant: Contemporary Amperex Technology Co., Limited, Ningde, Fujian 352100 (CN)
(72) Inventor: WU, Kai, Ningde, Fujian 352100 (CN); YANG, Zhengxing, Ningde, Fujian 352100 (CN); LIU, Bin, Ningde, Fujian 352100 (CN); LI, Kun, Ningde, Fujian 352100 (CN)
(74) Representative: Ziebig Hengelhaupt Intellectual Property Attorneys Patentanwaltskanzlei PartGmbB
(86) International application number: PCT/CN2023/121180
(87) International publication number: WO 2025/007432

(57) **Abstract**

A battery box, a battery system and a vehicle. The battery box (10) comprises: a plurality of battery branches (11), which are connected in parallel, wherein each of the plurality of battery branches (11) comprises a battery (11a); branch interfaces (12), which are arranged corresponding to the battery branches (11), wherein the branch interfaces (12) are electrically connected to the corresponding battery branches (11) and are configured to connect to external battery boxes (20); a high-voltage power distribution module (13), which is electrically connected to the battery branches (11) and is configured to perform power distribution management and monitoring on the battery branches (11); and a main loop output interface (14), which is electrically connected to the battery branches (11) and the high-voltage power distribution module (13), respectively, and is configured to connect to a power supply interface of a vehicle (1000). Electric energy is provided by means of the plurality of battery branches (11) connected in parallel, and the branch interfaces (12) are provided to connect to the external battery boxes (20), so as to connect batteries in the external battery boxes (20) to the high-voltage power distribution module (13), such that the high-voltage power distribution module (13) can couple electric energy of the plurality of battery branches (11) connected in parallel, thereby realizing high-voltage power distribution; and the function of a high-voltage power distribution box is integrated in the battery box (10), thereby improving the integration level of a battery system.

## Description

The present application claims priority to Chinese Patent Application No. 202321746961.8, filed with the China National Intellectual Property Administration on July 5, 2023 and entitled "BATTERY CASE, BATTERY SYSTEM, AND VEHICLE", which is incorporated herein by reference in its entirety.

### TECHNICAL FIELD

The present application relates to the technical field of batteries, and in particular, to a battery case, a battery system, and a vehicle.

### BACKGROUND

With the continuous development of electric vehicles and hybrid vehicles, users have increasingly higher requirements for battery cases of vehicles, and hope that the shorter the charging time of the battery cases, the better. In order to improve the endurance of the vehicle and reduce the user's waiting time for the charging of the vehicle, a quick-swap technology for a rechargeable battery is currently proposed. The quick-swap technology refers to direct replacement with a charged battery case for an electric vehicle, and the battery case that originally needs to be charged is placed in a battery swapping station for charging, thereby reducing the user's waiting time for charging the electric vehicle.

At present, the battery system needs to be additionally configured with a high-voltage power distribution box, and the high-voltage power distribution box is used to perform power distribution management and monitoring on the battery case, resulting in the problem of a low integration level.

### TECHNICAL PROBLEM

The present application provides a battery case and a vehicle, which solve the problem of a low integration level in the current battery system of an electric vehicle.

### TECHNICAL SOLUTION

To achieve the above objective, the present application adopts the following technical solutions.

In a first aspect, a battery case is provided. The battery case includes: a plurality of battery branches, where the plurality of battery branches are connected in parallel, and each of the plurality of battery branches includes a battery;
branch interfaces arranged corresponding to the battery branches, where the branch interfaces are electrically connected to the corresponding battery branches, and are configured to be connected to an external battery case;
a high-voltage power distribution module, electrically connected to the battery branches and configured to perform power distribution management and monitoring on the battery branches; and
a main circuit output interface, electrically connected to the battery branches and the high-voltage power distribution module and configured to be connected to a power supply interface of a vehicle.

In the embodiments of the present application, the high-voltage power distribution module of a high-voltage power distribution box is integrated in the battery case, and the high-voltage power distribution module inside the battery case is used to perform power distribution management and monitoring on the plurality of parallel battery branches in the battery case, thereby improving the integration level of a battery system of an electric vehicle.

In an implementation of the first aspect, different battery branches include an equal number of batteries.

In an implementation of the first aspect, the branch interface includes: a positive electrode branch interface, electrically connected to a positive electrode of the battery in the battery branch and configured to be connected to a positive electrode interface of the external battery case; and
a negative electrode branch interface, electrically connected to a negative electrode of the battery in the battery branch and configured to be connected to a negative electrode interface of the external battery case.

In an implementation of the first aspect, the battery case further includes: a protection module, electrically connected to the battery branch.

In an implementation of the first aspect, the protection module includes: a battery branch protection unit, connected to the battery of the battery branch; and a main circuit protection unit, connected between the battery branch and the main circuit output interface.

In an implementation of the first aspect, the main circuit protection component includes:
a main circuit positive electrode protection component, connected between a positive electrode branch interface and the main circuit output interface; and
a main circuit negative electrode protection component, connected between a negative electrode branch interface and the main circuit output interface.

In an implementation of the first aspect, the battery branch protection unit includes a fuse.

In the embodiments of the present application, the fuse is provided in each battery branch. In the case of overvoltage, overcurrent, or the like, the fuse blows to protect the battery in the battery branch, thus improving the safety of the battery case.

In an implementation of the first aspect, the main circuit positive electrode protection component includes a first relay. The main circuit positive electrode protection component further includes a second relay.

In the embodiments of the present application, by arranging two main circuit protection components, the security in the case of a single-point failure can be improved.

In an implementation of the first aspect, the protection module further includes: a pre-charge unit, where the pre-charge unit is connected in parallel with the main circuit protection unit.

In the embodiments of the present application, by arranging the pre-charge unit, the overall adaptability of the battery case to the vehicle can be improved.

In an implementation of the first aspect, the battery branch further includes: a current sensing module, connected to the negative electrode branch interface.

In an implementation of the first aspect, the high-voltage power distribution module includes: a first sampling unit, electrically connected to the battery branch and configured to acquire a working parameter of the battery;
a second sampling unit, electrically connected to the main circuit output interface and configured to acquire a bus voltage; and
a battery management unit, connected to the first sampling unit and the second sampling unit for power distribution management and monitoring.

In an implementation of the first aspect, the main circuit output interface includes a high-voltage power terminal and a low-voltage terminal.

In an implementation of the first aspect, the main circuit output interface includes a quick-swap electrical connector.

In an implementation of the first aspect, the battery case further includes: a communication interface, electrically connected to the high-voltage power distribution module and configured to be connected to the external battery case.

In the embodiments of the present application, the communication interface is connected to a communication interface of the external battery case, such that related information (such as temperature and voltage) of the battery in the external battery case can be obtained and transmitted to the high-voltage power distribution module. In this way, the high-voltage power distribution module manages and monitors the battery in the external battery case. Specifically, the battery in the external battery case may be managed and monitored by the battery management unit in the high-voltage power distribution module.

In an implementation of the first aspect, the battery case further includes: a debugging and diagnosis interface, electrically connected to the battery branch and configured to be connected to a test device.

In the embodiments of the present application, in the case where the battery in the battery case needs to be debugged, the debugging and diagnosis interface may be used to connect a debugging apparatus for debugging.

In an implementation of the first aspect, the battery case further includes a water inlet and a water outlet.

In an implementation of the first aspect, the battery case includes a case body; and the batteries are placed on two sides inside the case body, and electrical elements of the battery case are placed between the batteries on the two sides.

In the embodiments of the present application, the batteries are placed on the two sides inside the case body, and the electrical elements are placed in the middle, thereby improving the rigidity of the overall structure of the battery case.

In an implementation of the first aspect, the main circuit output interface is provided on an upper surface of the case body, and the branch interface, the communication interface, the debugging and diagnosis interface, the water inlet, and the water outlet are provided on a vertical surface of the case body.

In a second aspect, a battery system is provided. The battery system includes the battery case according to any implementation of the first aspect and an external battery case connected to the battery case.

In a third aspect, the embodiments of the present application provide a vehicle. The vehicle includes the battery case according to the first aspect or the battery system according to the second aspect.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the present application. Furthermore, the same reference numerals in all the drawings denote identical components. In the drawings:
FIG. 1 is a schematic structural diagram of a vehicle according to some embodiments of the present application;
FIG. 2 is a schematic structural diagram of an internal circuit of a battery case according to some embodiments of the present application;
FIG. 3 is a schematic structural diagram of an internal circuit of a battery case according to some other embodiments of the present application;
FIG. 4 is a schematic diagram of an application scenario of a battery case according to some embodiments of the present application;
FIG. 5 is a schematic structural diagram of an internal circuit of a battery case according to some other embodiments of the present application;
FIG. 6 is a schematic structural diagram of an internal circuit of a battery case according to some other embodiments of the present application;
FIG. 7 is a schematic structural diagram of an internal circuit of a battery case according to some other embodiments of the present application;
FIG. 8 is a schematic structural diagram of an internal circuit of a battery case according to some other embodiments of the present application;
FIG. 9 is a schematic structural diagram of an internal circuit of a battery case according to some embodiments of the present application;
FIG. 10 is a schematic structural diagram of an internal circuit of a battery case according to some other embodiments of the present application;
FIG. 11 is a schematic diagram of an application scenario of a battery case according to some other embodiments of the present application;
FIG. 12 is a schematic diagram of a layout of batteries and electrical elements of a battery case according to some embodiments of the present application; and
FIG. 13 is a schematic diagram of a layout of various interfaces of a battery case according to some embodiments of the present application.

### EMBODIMENTS OF THE PRESENT DISCLOSURE

Embodiments of the technical solutions of the present application will be described in detail below with reference to the drawings. The following embodiments are merely used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

To describe the technical solutions in the present application more clearly, the concepts involved in the present application are described as follows.

A battery cell is a basic unit device that directly converts chemical energy into electrical energy, and generally includes an electrode, a separator, an electrolyte, a housing, and a terminal.

A battery module is a device in which one or more battery cells are combined in series, in parallel, or in series-parallel, and there is only one pair of positive and negative electrode output terminals.

A battery case is a bearing member of batteries of an electric vehicle, and has functions of mounting, fixation, protection, and sealing. The battery case generally includes a case body, a battery accommodated inside the case body, an electrical element for realizing an electrical connection of the battery, and an interface for connection with the outside. The battery case is usually provided with a cell acquisition unit (cell supervision circuit, CSC), which can acquire temperature and voltage information of each battery cell.

A high-voltage power distribution box is a high-voltage power distribution device of an electric vehicle, which can couple the output electrical energy of a plurality of battery cases and distribute the output electrical energy of the plurality of battery cases to systems requiring a high-voltage power supply, such as a motor controller, an electric compressor, and a PTC heater. The high-voltage power distribution box has current and voltage acquisition functions, and can perform safety management on the battery cases to implement functions such as overvoltage protection, overcurrent protection, and over-temperature protection. In addition, the high-voltage power distribution box also has the function of real-time monitoring of a high-voltage connection status and a high-voltage insulation status.

The high-voltage power distribution box generally includes a current sensor, a high-voltage sampling module, and a battery management unit (BMU). The current sensor can acquire current parameters of each battery case; the high-voltage sampling module can acquire a voltage of a high-voltage bus and monitor an insulation status of the high-voltage bus; and the battery management unit can perform information aggregation and analysis, monitoring and management of the battery system of the entire electric vehicle, as well as interaction with the outside.

At present, a battery system of an electric vehicle needs to be additionally configured with a high-voltage power distribution box, and an external high-voltage power distribution box is used to perform power distribution management and monitoring on the battery case, resulting in the problem of a low integration level.

Based on the above problem, the embodiments of the present application provide a battery case. By integrating a high-voltage power distribution box into the battery case, a high-voltage power distribution module is used to perform power distribution management and monitoring on a plurality of parallel battery branches in the battery case, and a branch interface is provided to connect an external battery case to realize output management and monitoring on the external battery case, thereby effectively improving the integration level of a battery system of a vehicle.

The battery case disclosed in the embodiments of the present application can be used in electric devices that use batteries as the power source or in various energy storage systems that use batteries as the energy storage element. The electric device includes, but is not limited to, an electric tool, an electric bicycle, an electric vehicle, a ship, a spacecraft, and the like. The spacecraft may include an airplane, a rocket, a space shuttle, a spaceship, and the like.

In the following embodiments, for ease of description, the present application is illustrated by taking a vehicle 1000 as an example of the electric device according to an embodiment of the present application.

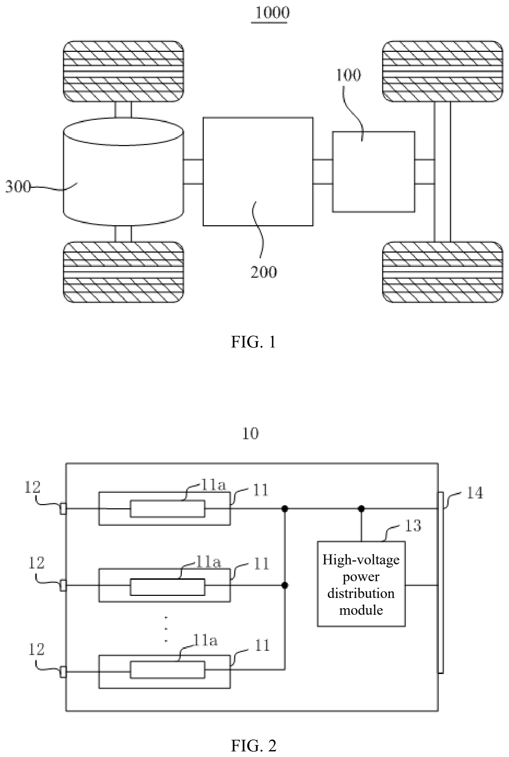

Referring to FIG. 1, FIG. 1 is a schematic structural diagram of a vehicle 1000 according to some embodiments of the present application. The vehicle 1000 may be a new energy vehicle, and the new energy vehicle may be a pure electric vehicle, a hybrid vehicle, an extended-range vehicle, or the like. A battery system 100 is arranged inside the vehicle 1000, and the battery system 100 may be arranged at the bottom, head, or tail of the vehicle 1000. The battery system 100 may be configured to power the vehicle 1000. For example, the battery system 100 may serve as an operation power source for the vehicle 1000.

In some embodiments of the present application, the battery system 100 may not only serve as an operation power source for the vehicle 1000, but also as a driving power source for the vehicle 1000 to, replacing or partially replacing fuel or natural gas, provide driving power for the vehicle 1000.

In some embodiments of the present application, the battery system 100 includes the battery case provided in the embodiments of the present application. A battery cell or battery may be included in the battery case. There may be a plurality of battery cells, and the plurality of battery cells may be connected in series, in parallel, or in series-parallel. The series-parallel connection means that both series connection and parallel connection are present for the connection among the plurality of battery cells. The plurality of battery cells may be directly connected in series, in parallel, or in series-parallel, and then the whole formed by the plurality of battery cells is accommodated in the case body; and a plurality of batteries are connected in series, in parallel, or in series-parallel to form a whole and are accommodated in the case body. The battery system 100 may further include other structures. For example, the battery system 100 may further include a busbar component for achieving an electrical connection among the plurality of battery cells.

In some embodiments of the present application, the battery system may include a common battery case (i.e., a battery case without an integrated high-voltage power distribution box function, i.e., an external battery case) and the battery case provided in the embodiments of the present application (i.e., a battery case integrated with a high-voltage power distribution box). The high-voltage power distribution module in the battery case provided in the embodiments of the present application couples the output electrical energy of the battery of the battery system to implement the function of the high-voltage power distribution box.

Each battery cell may include a secondary battery or a primary battery, and may further include a lithium-sulfur battery, a sodium-ion battery, or a magnesium-ion battery. The battery cell may be cylindrical, flat, rectangular parallelepiped, or in other shapes.

Certainly, the vehicle 1000 may further include a battery management system 200 and a motor 300. Main functions of the battery management system (BMS) 200 include battery parameter monitoring, battery status estimation, online fault diagnosis, charging control, automatic balancing, thermal management, and the like. In the embodiments of the present application, the high-voltage power distribution module of the battery case integrates some functions of the battery management system, and thus can also implement functions such as battery parameter monitoring.

The battery case provided in the embodiments of the present application is described below with reference to the drawings.

Referring to FIG. 2, FIG. 2 is a schematic structural diagram of a battery case according to the embodiments of the present application. As shown in FIG. 2, the battery case 10 may include a plurality of battery branches 11, branch interfaces 12 arranged corresponding to the battery branches 11, a high-voltage power distribution module 13, and a main circuit output interface 14.

The plurality of battery branches 11 are connected in parallel, and each of the plurality of battery branches 11 includes a battery 11a.

The branch interface 12 is electrically connected to the corresponding battery branch 11, and is configured to be connected to an external battery case 20.

The high-voltage power distribution module 13 is electrically connected to the battery branch 11, and is configured to perform power distribution management and monitoring on the battery branch 11.

The main circuit output interface 14 is electrically connected to the battery branch 11 and the high-voltage power distribution module 13, and is configured to be connected to a power supply interface of a vehicle 1000.

In the embodiments of the present application, a plurality of battery branches connected in parallel are used to provide electrical energy, and branch interfaces are provided to connect an external battery case, such that a battery of the external battery case is connected to the high-voltage power distribution module in the battery case provided in the embodiments of the present application. In this way, the high-voltage power distribution module can couple the electrical energy provided by the plurality of battery branches connected in parallel, to implement high-voltage power distribution, distribute the electrical energy to a system/module requiring high-voltage power supply, and integrate a function of the high-voltage power distribution box into the battery case, thereby effectively improving the integration level of the battery system.

In a specific application, the battery 11a may be a battery cell or a battery module. The battery branch 11 may include a plurality of batteries 11a, and the plurality of batteries 11a may be connected in series and/or in parallel; that is, the plurality of batteries 11a may be connected in series, in parallel, or in series-parallel. The batteries 11a being connected in series-parallel means that the batteries may be connected in series first and then in parallel, or may be connected in parallel first and then in series.

In a specific application, different battery branches 11 in the battery case 10 may include equal or unequal numbers of batteries 11a.

When the number of batteries 11a in different battery branches 11 in the battery case 10 is not equal, in order to ensure that the output voltage of each battery branch 11 is consistent, when an external battery case is connected, the number of batteries 11a contained in each connected battery branch 11 needs to be equal.

Illustratively, it is assumed that the battery case 10 includes three battery branches 11, i.e., a first battery branch, a second battery branch, and a third battery branch, where the number of batteries 11a in the first battery branch is 1, the number of batteries 11a in the second battery branch is 2, and the number of batteries 11a in the third battery branch is 3. When an external battery case 20 is connected (it is assumed that the number of batteries in each battery case 20 is 1, and the battery specifications are consistent), the first battery branch needs to be connected to three external battery cases, the second battery branch needs to be connected to two external battery cases 20, and the third battery branch needs to be connected to one external battery case 20, such that the output voltage of each battery branch is consistent.

It can be understood that the external battery case may also be a battery case of a different specification. When the external battery case 20 is connected via the battery branch 11, the parameters of the battery 11a in each battery branch 11 in the battery case 10 and the parameters of the battery in the external battery case 20 may be considered to determine which external battery case 20 or external battery cases each battery branch needs to be connected to.

It can be concluded that in the case where the number of batteries 11a in different battery branches 11 is not equal, the number of connected external battery cases 20 is determined based on the number of batteries 11a in different battery branches 11 when the external battery cases 20 are connected. For ease of connection, in an embodiment of the present application, different battery branches 11 are configured to include an equal number of batteries 11a.

Here, in the case where the number of batteries 11a in different battery branches 11 is equal, the number of batteries 11a in the battery case 10 is an integer multiple of the number of battery branches 11.

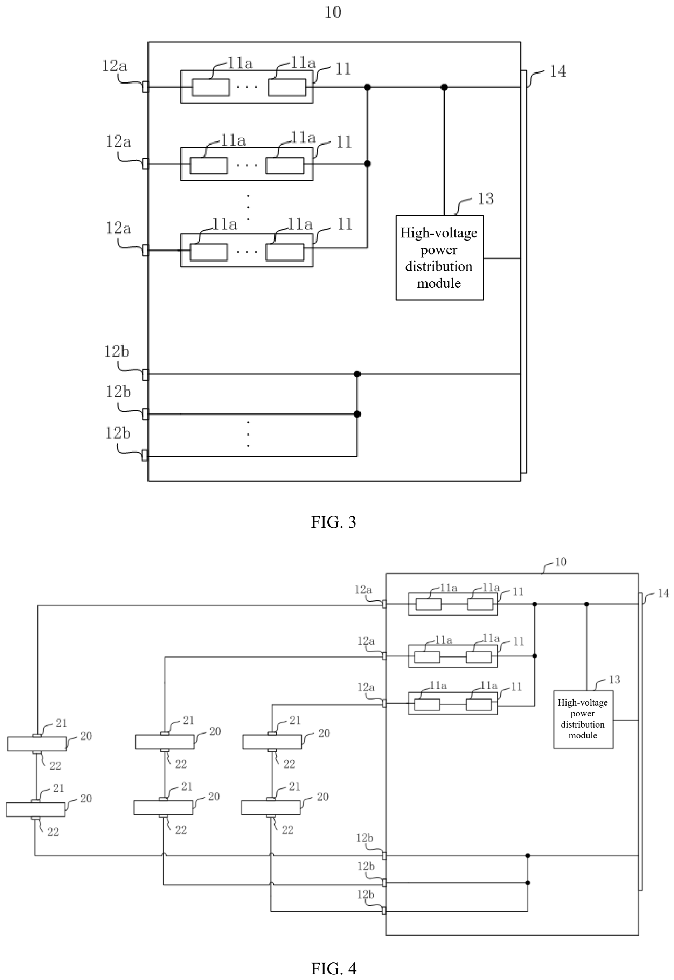

In an embodiment of the present application, as shown in FIG. 3, the branch interface 12 may include a positive electrode branch interface 12a and a negative electrode branch interface 12b.

The positive electrode branch interface 12a is electrically connected to a positive electrode of the battery 11a in the battery branch 11, and is configured to be connected to a positive electrode interface 21 of an external battery case 20.

The negative electrode branch interface 12b is electrically connected to a negative electrode of the battery 11a in the battery branch 11, and is configured to be connected to a negative electrode interface 22 of an external battery case 20.

In a specific application, the external battery case 20 may be a common battery case; that is, the battery case only includes a battery, a busbar component for implementing battery connection, and a protection component, but does not include a high-voltage power distribution module. That is, in the battery case 10 provided in the embodiments of the present application, the high-voltage power distribution module 13 couples and distributes the output electrical energy of the plurality of parallel battery branches 11 formed by the plurality of battery cases (including the battery case 10 provided in the embodiments of the present application and the external battery case 20).

Illustratively, referring to FIG. 4, FIG. 4 shows a schematic diagram of an application scenario of a battery case according to the embodiments of the present application.

As shown in FIG. 4, the battery case 10 includes three battery branches 11, and the number of batteries in each battery branch 11 is equal (assumed to be 2). Each battery branch is connected to two external battery cases 20 (it is assumed that the specifications of each external battery case 20 are consistent).

In a specific application, the battery case 10 is connected to the positive electrode interface 21 of the external battery case 20 via the positive electrode branch interface 12a, and is connected to the negative electrode interface 22 of the external battery case 20 via the negative electrode branch interface 12b, such that the external battery case is connected to the battery branch 11, and the high-voltage power distribution module in the battery case 10 can be used to perform power distribution management on the output electrical energy of the batteries 11a in the plurality of battery branches 11 connected in parallel.

It can be understood that in some embodiments of the present application, the external battery case 20 may also be a battery case integrating functions of a high-voltage power distribution box provided in the embodiments of the present application, which will not be described in detail in the present application.

In a specific application, the positive electrode branch interface 12a and the negative electrode branch interface 12b are mainly configured for high-voltage connection electrical energy transmission, and may include, but are not limited to, a quick-plug connector or a lock bolt connector.

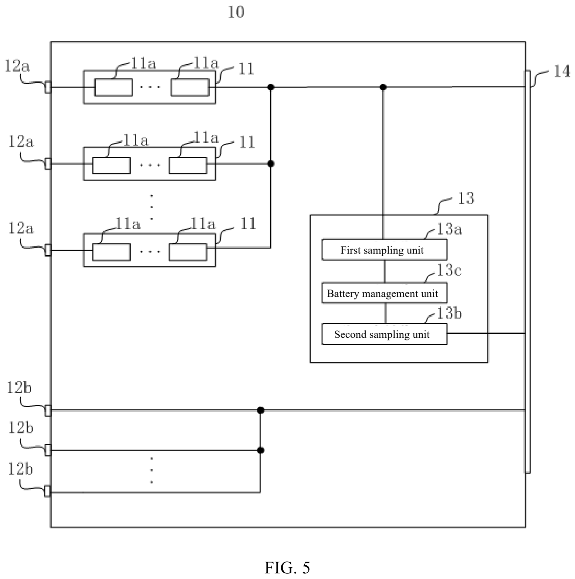

In an embodiment of the present application, referring to FIG. 5, FIG. 5 is a schematic structural diagram of a battery case according to some other embodiments of the present application. As shown in FIG. 5, the high-voltage power distribution module 13 may include a first sampling unit 13a, a second sampling unit 13b, and a battery management unit 13c.

The first sampling unit 13a is electrically connected to the battery branch 11, and is configured to acquire a working parameter of the battery 11a. The second sampling unit 13b is electrically connected to the main circuit output interface 14, and is configured to acquire a bus voltage. The battery management unit 13c is connected to the first sampling unit 13a and the second sampling unit 13b for power distribution management and monitoring.

In a specific application, the working parameter of the battery 11a may include, but is not limited to, a battery temperature and a battery voltage. Specifically, the first sampling unit may be a CSC acquisition unit, which acquires temperature and voltage information of each battery cell and feeds back the temperature and voltage information to the battery management unit 13c, such that the battery management unit 13c can monitor the status of the battery in each battery case.

In a specific application, the second sampling unit 13b may be connected to a high-voltage bus via the main circuit output interface 14, to acquire the bus voltage of the high-voltage bus. In addition, the second sampling unit 13b may further monitor the insulation status of the high-voltage bus.

In a specific application, the battery management unit 13c can aggregate and analyze information acquired by the first sampling unit 13a and the second sampling unit 13b, to determine a battery status and a working environment status. In addition, the battery management unit 13c can also implement a high-voltage power distribution function to provide a high-voltage power supply for a system/module requiring a high-voltage power supply.

In a specific application, the main circuit output interface 14 is a power supply output interface of the battery case 10 for the whole vehicle; that is, the main circuit output interface 14 is docked with the whole vehicle and connected to a power supply interface of the vehicle 1000 to realize power supply.

In an embodiment of the present application, the main circuit output interface 14 may integrate a high-voltage terminal and a low-voltage terminal. The high-voltage terminal may withstand a voltage of up to 5 KV, and the low-voltage terminal may include connection terminals of connectors such as a signal connector, a data transmission connector, and an optical fiber connector.

In a specific application, the main circuit output interface 14 may include a quick-swap electrical connector.

The quick-swap electrical connector is an important part of the quick-swap battery system, and is a dedicated connector for realizing quick electrical connection and disconnection between the whole vehicle and the quick-swap battery system. The quick-swap electrical connector mainly includes a quick-swap plug, a quick-swap socket, and related cables, such that the voltage and current can be quickly changed. Since the quick-swap electrical connector adopts a specially designed conductive material, the occurrence of electric shock accidents can be effectively reduced, thereby improving the safety of battery swapping.

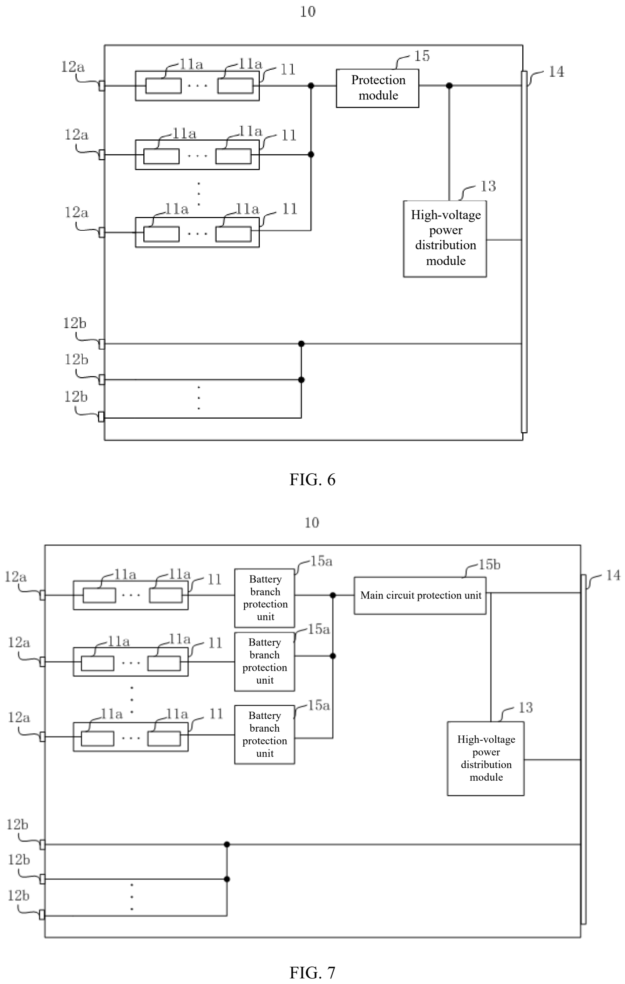

In an embodiment of the present application, referring to FIG. 6, FIG. 6 shows a schematic structural diagram of a battery case according to some other embodiments of the present application. As shown in FIG. 6, the battery case 10 further includes a protection module 15.

The protection module 15 is electrically connected to the battery branch 11.

The protection module 15 is configured to protect the battery 11a in the battery branch 11, and may include a protection device such as a fuse or a relay.

In an embodiment of the present application, referring to FIG. 7, FIG. 7 is a schematic structural diagram of a battery case according to some other embodiments of the present application. As shown in FIG. 7, the protection module 15 may include a battery branch protection unit 15a and a main circuit protection unit 15b.

The battery branch protection unit 15a is connected to the battery 11a in the battery branch 11. The main circuit protection unit 15b is connected between the battery branch 11 and the main circuit output interface 14.

The battery branch protection unit 15a is configured to protect each battery branch, and the main circuit protection unit 15b is configured to protect the entire output circuit.

In a specific application, the main circuit protection unit 15b may include a main circuit positive electrode protection component 15b1 and a main circuit negative electrode protection component 15b2.

The main circuit positive electrode protection component 15b1 is connected between the positive electrode branch interface 12a and the main circuit output interface 14. The main circuit negative electrode protection component 15b2 is connected between the negative electrode branch interface 12b and the main circuit output interface 14.

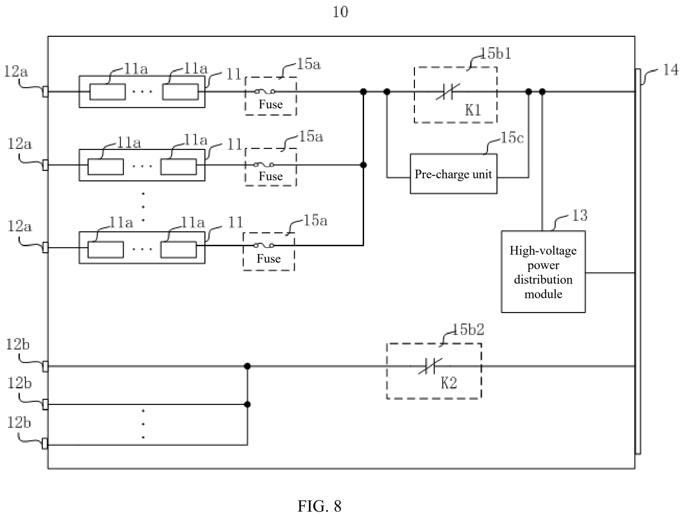

Illustratively, referring to FIG. 8, FIG. 8 is a schematic structural diagram of an internal circuit of a battery case according to some embodiments of the present application. As shown in FIG. 8, the battery branch protection unit 15a includes a fuse.

In the embodiments of the present application, the fuse is provided in each battery branch. In the case of overvoltage, overcurrent, or the like, the fuse blows to protect the battery in the battery branch, thus improving the safety of the battery case.

Still referring to FIG. 8, in a specific application, the main circuit positive electrode protection component 15b1 includes a first relay K1, and the main circuit negative electrode protection component 15b2 includes a second relay K2.

In the embodiments of the present application, by arranging two main circuit protection components, the security in the case of a single-point failure can be improved.

Each battery branch 11 is provided with one battery branch protection unit 15a; that is, each battery branch 11 is provided with a fuse.

Still referring to FIG. 8, in an embodiment of the present application, the protection module 15 may further include a pre-charge unit 15c, and the pre-charge unit 15c is connected in parallel with the main circuit protection unit 15b.

In a specific application, the pre-charge unit 15c may be connected in parallel with the main circuit positive electrode protection component 15b1, or may be connected in parallel with the main circuit negative electrode protection component 15b2. FIG. 8 only shows an example of the pre-charge unit 15c being connected in parallel with the main circuit positive electrode protection component 15b1.

In a specific application, the pre-charge unit may be implemented by using an existing pre-charge circuit, which will not be described in detail in the present application.

In the embodiments of the present application, by arranging the pre-charge unit, the overall adaptability of the battery case to the vehicle can be improved.

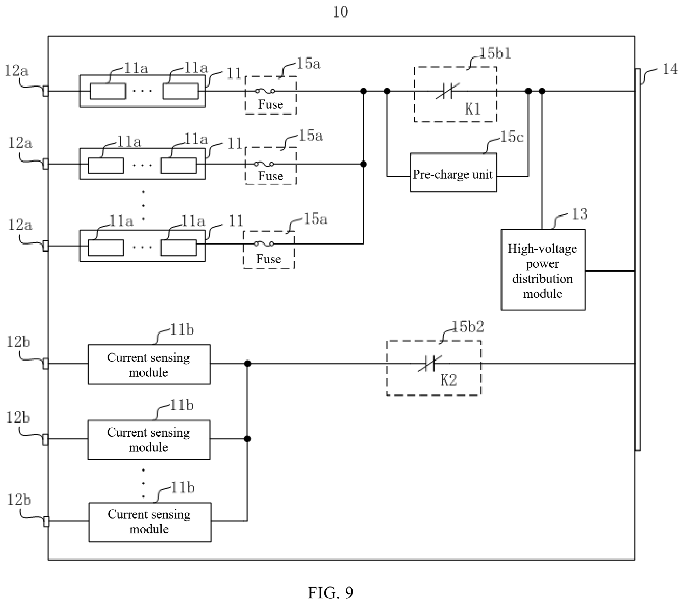

In an embodiment of the present application, referring to FIG. 9, FIG. 9 is a schematic structural diagram of a battery case according to some other embodiments of the present application. As shown in FIG. 9, each battery branch 11 is further correspondingly provided with a current sensing module 11b, and the current sensing module 11b is connected to the negative electrode branch interface. A current parameter of each battery branch can be detected by using the current sensing module 11b in each battery branch 11, thereby determining the battery condition of each battery branch 11.

In a specific application, the current sensing module 11b may include a current sensor.

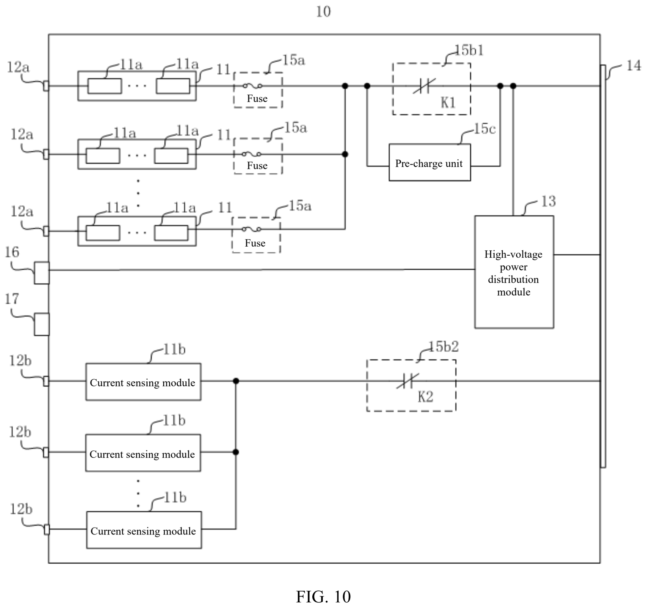

In an embodiment of the present application, referring to FIG. 10, FIG. 10 is a schematic structural diagram of a battery case according to some other embodiments of the present application. As shown in FIG. 10, the battery case provided in the embodiments of the present application further includes a communication interface 16 and a debugging and diagnosis interface 17.

The communication interface 16 is electrically connected to the high-voltage power distribution module 13, and is configured to be connected to the external battery case 20.

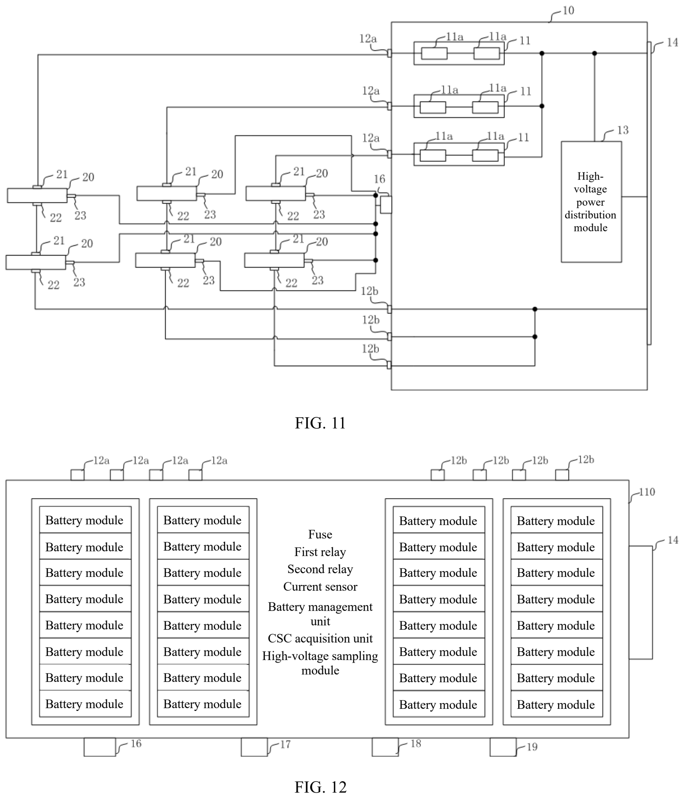

In a specific application, referring to FIG. 11, FIG. 11 is a schematic diagram of an application scenario of a battery case according to some other embodiments of the present application. As shown in FIG. 11, the communication interface 16 is connected to a communication interface 23 of the external battery case 20, such that related information (such as temperature and voltage) of the battery in the external battery case 20 can be obtained and transmitted to the high-voltage power distribution module 13. In this way, the high-voltage power distribution module 13 manages and monitors the battery in the external battery case 20. Specifically, the battery in the external battery case 20 may be managed and monitored by the battery management unit 13c in the high-voltage power distribution module 13.

In a specific application, the communication interface 16 may be a low-voltage communication interface.

The debugging and diagnosis interface 17 is electrically connected to the battery branch 11. The debugging and diagnosis interface 17 may also be a low-voltage connector, which can provide a debugging interface for the battery. In the case where the battery 11a in the battery case 10 needs to be debugged, the debugging and diagnosis interface 17 may be used to connect a debugging apparatus for debugging.

In an embodiment of the present application, the battery case further includes a water inlet 18 and a water outlet 19.

In a specific application, the water inlet 18 and the water outlet 19 are configured to convey a liquid used in a temperature equalization process of the battery 11a.

In order to improve the rigidity of the overall structure of the battery case, in an embodiment of the present application, the battery case 10 includes a case body 110.

The batteries 11a are placed on two sides of the case body 110, and the electrical elements of the battery case 10 are placed between the batteries 11a on the two sides.

In the embodiments of the present application, the electrical elements include, but are not limited to, the fuse, the first relay, the second relay, the current sensor, the battery management unit, the CSC acquisition unit, the high-voltage sampling module, and the like.

Illustratively, referring to FIG. 12, FIG. 12 is a schematic diagram of a layout of batteries and electrical elements of a battery case according to some embodiments of the present application. As shown in FIG. 12, in this example, the battery 11a is a battery module. It is assumed that the battery case includes 4 (four battery branches) * 8 (each battery branch includes eight battery modules) battery modules. That is, when placing the battery modules, the 32 battery modules may be evenly divided into four groups. Two groups of battery modules (each group of battery modules includes eight battery modules) are placed on each side of the two sides in the case body 110 of the battery case 10, and the fuse, the first relay, the second relay, the current sensor, the battery management unit, the CSC acquisition unit, and the high-voltage sampling module are placed in the middle (i.e., between the battery modules on the two sides).

For ease of connection, in an embodiment of the present application, the main circuit output interface 14 is arranged on an upper surface of the case body 110. The branch interface 12, the communication interface 16, the debugging and diagnosis interface 17, the water inlet 18, and the water outlet 19 are arranged on a vertical surface of the case body 110.

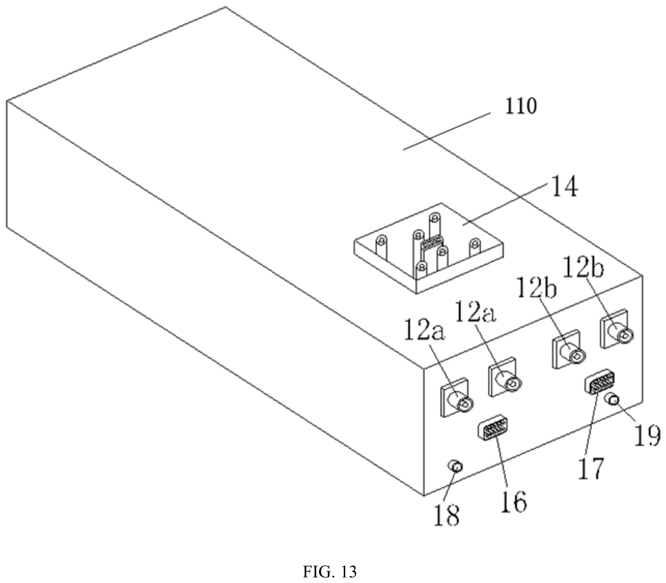

Illustratively, referring to FIG. 13, FIG. 13 is a schematic diagram of a layout of various interfaces of a battery case according to some embodiments of the present application. As shown in FIG. 13, the upper surface of the case body 110 is provided with a main circuit output interface 14, and the vertical surface of the case body 110 is provided with a positive electrode branch interface 12a (two positive electrode branch interfaces 12a are shown as an example in FIG. 11), a negative electrode branch interface 12b (two negative electrode branch interfaces 12b are shown as an example in FIG. 11), a communication interface 16, a debugging and diagnosis interface 17, and a water inlet 18.

The embodiments of the present application further provide a battery system. The battery system includes the battery case according to any one of the above embodiments and an external battery case connected to the battery case.

The embodiments of the present application further provide a vehicle. The vehicle includes the above battery system or the above battery case.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery case, comprising:
a plurality of battery branches, wherein the plurality of battery branches are connected in parallel, and each of the plurality of battery branches comprises a battery;
branch interfaces arranged corresponding to the battery branches, wherein the branch interfaces are electrically connected to the corresponding battery branches, and are configured to be connected to an external battery case;
a high-voltage power distribution module, electrically connected to the battery branches and configured to perform power distribution management and monitoring on the battery branches; and
a main circuit output interface, electrically connected to the battery branches and the high-voltage power distribution module and configured to be connected to a power supply interface of a vehicle.

2. The battery case according to claim 1, wherein different battery branches comprise an equal number of batteries.

3. The battery case according to claim 1, wherein the branch interface comprises:
a positive electrode branch interface, electrically connected to a positive electrode of the battery in the battery branch and configured to be connected to a positive electrode interface of the external battery case; and
a negative electrode branch interface, electrically connected to a negative electrode of the battery in the battery branch and configured to be connected to a negative electrode interface of the external battery case.

4. The battery case according to claim 1, wherein the battery case further comprises:
a protection module, electrically connected to the battery branch.

5. The battery case according to claim 4, wherein the protection module comprises:
a battery branch protection unit, connected to the battery of the battery branch; and
a main circuit protection unit, connected between the battery branch and the main circuit output interface.

6. The battery case according to claim 5, wherein the main circuit protection unit comprises:
a main circuit positive electrode protection component, connected between a positive electrode branch interface and the main circuit output interface; and
a main circuit negative electrode protection component, connected between a negative electrode branch interface and the main circuit output interface.

7. The battery case according to claim 5, wherein the battery branch protection unit comprises a fuse.

8. The battery case according to claim 6, wherein the main circuit positive electrode protection component comprises a first relay.

9. The battery case according to claim 6, wherein the main circuit positive electrode protection component further comprises a second relay.

10. The battery case according to claim 5, wherein the protection module further comprises:
a pre-charge unit, wherein the pre-charge unit is connected in parallel with the main circuit protection unit.

11. The battery case according to claim 3, wherein the battery branch further comprises:
a current sensing module, connected to the negative electrode branch interface.

12. The battery case according to claim 1, wherein the high-voltage power distribution module comprises:
a first sampling unit, electrically connected to the battery branch and configured to acquire a working parameter of the battery;
a second sampling unit, electrically connected to the main circuit output interface and configured to acquire a bus voltage; and
a battery management unit, connected to the first sampling unit and the second sampling unit for power distribution management and monitoring.

13. The battery case according to claim 1, wherein the main circuit output interface comprises a high-voltage power terminal and a low-voltage terminal.

14. The battery case according to claim 13, wherein the main circuit output interface comprises a quick-swap electrical connector.

15. The battery case according to any one of claims 1 to 14, wherein the battery case further comprises:
a communication interface, electrically connected to the high-voltage power distribution module and configured to be connected to the external battery case.

16. The battery case according to claim 15, wherein the battery case further comprises:
a debugging and diagnosis interface, electrically connected to the battery branch and configured to be connected to a test device.

17. The battery case according to claim 16, wherein the battery case further comprises a water inlet and a water outlet.

18. The battery case according to claim 17, wherein the battery case comprises a case body; and
the batteries are placed on two sides inside the case body, and electrical elements of the battery case are placed between the batteries on the two sides.

19. The battery case according to claim 18, wherein the main circuit output interface is provided on an upper surface of the case body.

20. The battery case according to claim 18, wherein the branch interface, the communication interface, the debugging and diagnosis interface, the water inlet, and the water outlet are provided on a vertical surface of the case body.

21. A battery system, comprising the battery case according to any one of claims 1 to 20 and an external battery case connected to the battery case.

22. A vehicle, comprising the battery case according to any one of claims 1 to 20 or comprising the battery system according to claim 21.
